# EUROPÄISCHE PATENTSCHRIFT

(11) **EP 3 033 244 B1**
(45) Veröffentlichungstag und Bekanntmachung des Hinweises auf die Patenterteilung: **08.05.2019**
(21) Anmeldenummer: 13763193.3
(22) Anmeldetag: 12.08.2013
(51) Int. Cl.: B60L 5/30, B60L 11/18

(54) **STROMÜBERTRAGUNGSVORRICHTUNG**
CURRENT TRANSMISSION DEVICE
DISPOSITIF DE TRANSMISSION DE COURANT

(43) Veröffentlichungstag der Anmeldung: 22.06.2016
(73) Patentinhaber: Schunk Bahn- und Industrietechnik GmbH, 5101 Bergheim (AT)
(72) Erfinder: PACHLER, Alexander, A-5020 Salzburg (AT)
(74) Vertreter: advotec.
(86) Internationale Anmeldenummer: PCT/EP2013/066839
(87) Internationale Veröffentlichungsnummer: WO 2015/022008

(56) Entgegenhaltungen:
- EP-A2- 0 356 835
- WO-A1-2007/143998
- CH-A- 96 411
- DE-C- 424 801
- GB-A- 2 357 482
- JP-A- H03 164 002

## Beschreibung

Die Erfindung betrifft eine Stromübertragungsvorrichtung zur stationären Aufladung elektrischer Energiespeicher von Vorrichtungen und/oder zur mobilen Versorgung elektrischer Antriebseinheiten von Vorrichtungen nach dem Oberbegriff des Anspruchs 1.

Stromübertragungsvorrichtungen der eingangs genannten Art sind beispielsweise auf Schienenfahrzeugen oder Bussen angeordnet zur mobilen Versorgung von elektrischen Antriebseinheiten der Schienenfahrzeuge. Ebenso sind derartige Stromübertragungsvorrichtungen an stationären Ladestromvorrichtungen zum Schnellladen von Energiespeichern angeordnet. Die Stromübertragungsvorrichtungen umfassen einen Rahmen, mit welchem diese an einer festen Struktur, wie beispielsweise dem Dach von Schienenfahrzeugen oder Bussen, angebracht sind. An dem Rahmen ist ein als Ausleger ausgebildeter Stromüberträger angeordnet, welcher zwischen einer stromübertragenden Ausfahrstellung und einer stromflussunterbrechenden Einfahrstellung verschwenkbar ist. Zur mobilen Versorgung elektrischer Antriebseinheiten und zur stationären Aufladung von Energiespeichern kommen an dem Stromüberträger angeordnete Kontaktflächen mit einem Gegenkontakt in Berührung. Der Gegenkontakt kann beispielsweise eine Oberleitung sein, die entlang den Schienen des Schienenfahrzeuges oder des Fahrwegs des Busses angeordnet ist. Er kann jedoch auch an einer Ladestromvorrichtungen und oberhalb der Vorrichtung angeordnet ist. Die bekannten Stromübertragungsvorrichtungen umfassen des Weiteren einen Verstellantrieb, welcher den Stromüberträger zwischen seiner Ausfahrstellung und Einfahrstellung verschwenkt. Mit dem Stromüberträger wirkt zudem ein Federsystem zusammen, welches den Stromüberträger in Richtung seiner Ausfahrstellung oder seine Einfahrstellung vorspannt. Ein derartiges Federsystem sichert beispielsweise ein Kontakthalten mit einer Oberleitung, wenn die Vorrichtung, wie beispielsweise ein Bus, durch Bodenunebenheiten in der Fahrbahn ihren Abstand zu einer Oberleitung verändert.

Bisherige Verstellantriebe von Stromübertragungsvorrichtungen sind zumeist als Spindelmotor ausgeführt. Diese sind jedoch gerade im Hinblick auf ihr Verhalten bei einem ausgeschalteten Zustand, einem Defekt oder einem Stromausfall problembehaftet.

Um ein durch die Federspannung bewirktes Ein- oder Ausfahren der Spindel bei abgeschaltetem Motor zu verhindern, weisen bisher verwendete Verstellantriebe oder Spindelmotoren eine Selbsthemmung auf. Bei der Verwendung eines Spindelmotors wird zumeist an der Gewindespindel eine mechanische Bremseinrichtung, wie beispielsweise eine Schlingfederbremse verwendet.

Die bisher bekannte Bremse ist jedoch gerade im Hinblick auf ein schnelles Erreichen der Ausfahrstellung des Stromüberträgers hinderlich. Die Ausfahrgeschwindigkeit des Stromüberträgers wird im Wesentlichen durch die Geschwindigkeit des Verstellantriebs beeinflusst. Bei einem Einsatz eines Spindelmotors verhindert die Selbsthemmung der Gewindespindel oder die mechanische Bremse ein schnelles Ausfahren des Stromüberträgers.

Ein solch schnelles Ausfahren des Stromüberträgers ist jedoch besonders wünschenswert, denn die Stromüberträger müssen im Rahmen von Schnellladeanwendungen sehr schnell an die Kontaktstelle oder Oberleitung geführt werden, um bei einer gegebenen Stillstandszeit der Vorrichtung bzw. des Fahrzeugs einen hohen Zeitanteil für den Ladevorgang zu gewährleisten.

Aus der DE 424 801 C ist eine Vorrichtung zur Betätigung des Stromabnehmers von Schienenfahrzeugen bekannt, welcher ausgelöst durch sein Eigengewicht in die Tieflage absinkt, wobei der Stromabnehmer mit einer elektromagnetischen Verriegelung gekuppelt ist.

Die CH 96 411 A zeigt eine Stromabnehmereinrichtung bei elektrischen Bahnen, bei der zur Betätigung des Stromabnehmers eine druckluftbetriebene Vorrichtung vorgesehen ist.

Die GB 2 357 482 A zeigt einen Pantographen, der als Stromübertragungsvorrichtung dient und einen Stromüberträger aufweist, welcher zwischen einer stromübertragenen Ausfallstellung und einer stromflussunterbrechenden Einfahrstellung verschwenkbar ist.

Aus der JP H03 164002 A ist ein von einem Elektromotor angetriebener Stromabnehmer bekannt.

Die EP 0 356 835 A2 zeigt eine Stromübertragungsvorrichtung zur mobilen Versorgung elektrischer Antriebseinheiten, umfassend einen Rahmen zur Anordnung der Stromübertragungsvorrichtung an der Vorrichtung und einen an dem Rahmen angeordneten als Gelenkarmsystem ausgebildeten Stromüberträger, der mit einem Verstellantrieb zusammenwirkt, wobei eine elektromagnetische Betätigungsvorrichtung vorgesehen ist, welche schaltbar ausgeführt ist, so dass sie die Verschwenkbewegung des Stromüberträgers entweder freigibt oder eine Stellung des Stromüberträgers festlegt.

Der Erfindung liegt nun die Aufgabe zugrunde, eine Stromübertragungsvorrichtung zur stationären Aufladen elektrischer Energiespeicher von Vorrichtungen und/oder zur mobilen Versorgung elektrischer Antriebseinheiten von Vorrichtungen zu schaffen, welche ein schnelles Erreichen der stromübertragenden Ausfahrstellung realisiert.

Diese Aufgabe wird durch eine Stromübertragungsvorrichtung mit den Merkmalen des Anspruchs 1 gelöst.

Erfindungsgemäß wird eine Stromübertragungsvorrichtung zur stationären Aufladung elektrischer Energiespeicher von Vorrichtungen und/oder zur mobilen Versorgung elektrischer Antriebseinheiten von Vorrichtungen vorgeschlagen. Diese umfasst einen Rahmen zur Anordnung der Stromübertragungsvorrichtung an der Vorrichtung, einen an dem Rahmen angeordneten und als Gelenkarmsystem ausgebildeten Stromüberträger, welcher zwischen einer stromübertragenden Ausfahrstellung und einer stromflussunterbrechenden Einfahrstellung verschwenkbar ist, einen mit dem Stromüberträger zusammenwirkenden Verstellantrieb und ein mit dem Stromüberträger zusammenwirkendes Federsystem. Die erfindungsgemäße Stromübertragungsvorrichtung zeichnet sich dadurch aus, dass der Verstellantrieb selbsthemmungsfrei ausgeführt und eine schaltbare elektromagnetische Betätigungsvorrichtung vorgesehen ist, welche als Bremsvorrichtung ausgebildet ist, sodass sie die Verschwenkbewegung des Stromüberträgers entweder frei gibt oder eine Stellung des Stromüberträgers festlegt. Der Verstellantrieb ist als Spindeltrieb ausgebildet und die Bremsvorrichtung wirkt direkt auf den Spindeltrieb ein.

Der Vorteil eines selbsthemmungsfreien Verstellantriebs liegt darin, dass bei Abschaltung der Energiezufuhr, dieser durch äußere Kräfte, wie zum Beispiel durch Federkräfte des Federsystems, verstellbar ist und somit der Stromüberträger in seiner Hubstellung verstellt werden kann. Das Federsystem überführt bei einem abgeschalteten Verstellantrieb den Stromüberträger in eine Stellung, die einem minimalen Energiezustand des Federsystems entspricht. Je nach Anordnung des Federsystems ist es also möglich, bei abgeschaltetem Verstellantrieb den Stromüberträger in seine stromübertragende Ausfahrstellung oder seine stromflussunterbrechende Einfahrstellung zu verschwenken.

Um den Stromüberträger bei einem abgeschalteten Verstellantrieb jedoch in einer Stellung festzulegen, ist eine elektromagnetische Bremsvorrichtung vorgesehen. Durch die erfindungsgemäße Stromübertragungsvorrichtung ist es nunmehr möglich in schneller Weise eine stromübertragende Ausfahrstellung zu realisieren und bei einem abgeschalteten selbtshemmungsfreien Verstellantrieb eine Verschwenkbewegung des Stromüberträgers frei zu geben oder zu blockieren.

Bei einer bevorzugten Ausführungsform der Stromübertragungsvorrichtung nach der Erfindung ist die elektromagnetische Bremsvorrichtung als Ruhestrombremse ausgeführt und durch Anlegen einer elektrischen Spannung die Verschwenkbewegung des Stromüberträgers freigibt. Eine derartige Bremsvorrichtung ist mit Vorteil dann geöffnet und entfaltet keine Bremswirkung, wenn beabsichtigt ist, den Verstellantrieb zu verfahren. Wird eine Ruhestrombremse erregt, so öffnet diese und lässt eine Bewegung des Stromüberträgers und der Spindel zu. Wird die Erregung unterbrochen, so schließt die Ruhestrombremse und verhindert eine weitere Bewegung.

Besonders vorteilhaft ist es, wenn eine Stromübertragungsvorrichtung mit einer als Ruhestrombremse ausgeführten Bremsvorrichtung an einer als Fahrzeug ausgeführten Vorrichtung, wie beispielsweise einem Schienenfahrzeug oder einem Bus, vorzugsweise auf dem Dach angeordnet ist. In seiner stromflussunterbrechenden Einfahrstellung ist der Stromüberträger bei geschlossener Bremse gegen die Federkraft des Federsystems in dieser Stellung festgelegt. Zu einem Anheben des Stromüberträgers aus seiner Einfahrstellung in seine stromübertragende Ausfahrstellung wird an die Ruhestrombremse eine elektrische Spannung angelegt, sodass diese die Verschwenkbewegung des Stromüberträgers freigibt. Durch Federkraft zieht das Federsystem den Stromabnehmer in seine Ausfahrstellung. Denkbar ist es hierbei, das Ausfahren des Stromüberträgers durch eine Unterstützung des Verstellantriebs zu beschleunigen. Da der Verstellantrieb selbsthemmungsfrei ausgeführt ist, kann bei geöffneter Bremse eine schnelle Verstellung des Stromüberträgers von seiner Einfahrstellung in seine Ausfahrstellung realisiert werden. Bei Erreichen der Ausfahrstellung, in welcher ein Strom übertragen wird, wird die an die Ruhestrombremse angelegte Spannung entfernt, sodass sich diese schließt und der Stromüberträger in seiner Ausfahrstellung festgelegt ist bzw. sich in seinem Arbeitsbereich bewegen kann. Durch die Federkraft des Federsystems wird der Stromüberträger gegen einen Gegenkontakt gedrückt, wie beispielsweise eine Oberleitung.

Zum Verschwenken des Stromabnehmers aus seiner Ausfahrstellung in seine Einfahrstellung wird an die Ruhestrombremse erneut eine Spannung angelegt, sodass sich diese öffnet und der Verstellantrieb den Stromüberträger in seine Einfahrstellung verfahren kann. Sobald die Einfahrstellung erreicht ist, stoppt der Verstellantrieb und die Ruhestrombremse schließt sich durch ein Entfernen der angelegten Spannung.

Bei einer weiteren bevorzugten Ausführungsform der Stromübertragungsvorrichtung nach der Erfindung ist die elektromagnetische Bremsvorrichtung als Arbeitsstrombremse ausgeführt und durch Anlegen einer elektrischen Spannung die Stellung des Stromüberträgers festgelegt.

Besonders vorteilhaft ist eine Stromübertragungsvorrichtung mit einer als Arbeitsstrombremse ausgeführten Bremsvorrichtung, welche an einer stationären Vorrichtung angeordnet ist, wie beispielsweise einer stationären Ladestromvorrichtung. Bei einer derartigen Ladestromvorrichtung ist die Stromübertragungsvorrichtung an einer Haltestelle oder einer Schnellladestation angeordnet. Der Stromüberträger verschwenkt von seiner Einfahrstellung in seine Ausfahrstellung von oben her nach unten in Richtung der Vorrichtung. Dabei kann die Vorrichtung beispielsweise ein Schienenfahrzeug oder ein Bus sein. In seiner Einfahrstellung ist der Stromüberträger oberhalb eines Vorrichtungsbereiches eingefahren und ein Stromfluss zu einer Vorrichtung unterbrochen. Die Einfahrstellung des Stromüberträgers ist mittels der Federkraft des Federsystems realisiert, welches den Stromüberträger in Richtung seiner Einfahrstellung vorspannt. Zum Herstellen der Ausfahrstellung wird ein nicht erregter Zustand der Arbeitsstrombremse hergestellt, so dass diese geöffnet ist und eine Verschwenkbewegung des Stromüberträgers freigibt. Der Verstellantrieb verfährt den Stromüberträger in seine Ausfahrstellung, bis die stromüberträgerseitigen Kontakte mit den vorrichtungsseitigen Kontakten einen Stromfluss herstellen. Um die elektrischen Energiespeicher der Vorrichtung zu laden, verbleibt der Stromabnehmer in seiner Ausfahrstellung. Diese Ausfahrstellung wird dadurch festgelegt, dass eine elektrische Spannung an die Arbeitsstrombremse angelegt wird, welche dadurch schließt und die Ausfahrstellung festlegt.

Zu einem Unterbrechen des Kontakts und zu einem Einfahren des Stromüberträgers aus seiner Ausfahrstellung wird die an die Arbeitsstrombremse angelegte elektrische Spannung entfernt, wodurch die Arbeitsstrombremse öffnet und das Federsystem den Stromüberträger in seine Einfahrstellung verschwenkt. Diese Verschwenkbewegung kann durch den Verstellantrieb unterstützt werden. Diese Ausführungsform ist besonders vorteilhaft bei einer ausgeschalteten Antriebsvorrichtung oder beispielsweise Stromausfall. Während des Ladevorgangs ist die Vorrichtung an der stationären Vorrichtung durch den ausgefahrenen Stromüberträger angeschlossen. Fällt der Strom aus, so entfällt die an die Arbeitsstrombremse angelegte Spannung, sodass die Arbeitsstrombremse öffnet. Der selbsthemmungsfreie Verstellantrieb lässt in seinem ausgestalteten Zustand eine Bewegung zu, so dass das Federsystem den Stromüberträger in seine Einfahrstellung verschwenkt und der Kontakt zur Vorrichtung unterbrochen wird.

Von besonderem Vorteil ist es, wenn die Bremsvorrichtung eine von dem Verstellantrieb unabhängige Energieversorgung aufweist. So ist es beispielsweise möglich, bei einer Stromunterbrechung, wie einem Stromausfall, die Bremsvorrichtung mit Notstrom zu versorgen und so zu steuern, dass trotz Stromausfalls eine Ausfahrstellung des Stromüberträgers weiterhin gewährleistet ist.

Alternativ ist es hierzu möglich, dass die Bremsvorrichtung und der Verstellantrieb eine mit einer Schaltvorrichtung zusammenwirkende, gemeinsame Energieversorgung aufweisen.

Bei einer besonders bevorzugten Ausführungsform der Stromübertragungsvorrichtung ist der Stromüberträger sowohl bodenwärts, himmelwärts, horizontal als auch in einer daraus resultierenden Zwischenrichtung verschwenkbar ausgeführt. Durch eine derartige Variabilität der Verschwenkrichtung ist es möglich, die erfindungsgemäße Stromübertragungsvorrichtung je nach Verwendungszweck an eine Einbausituation anzupassen.

Ebenfalls ist es vorteilhaft, dass die Bremsvorrichtung eine Manipulationsvorrichtung umfasst, mittels derer die Bremsvorrichtung manuell betätigbar ist. Dabei kann die Manipulationsvorrichtung beispielsweise ein Hebel oder ein Fernbetätigungszug sein, welcher die Bremsvorrichtung betätigt. Es ist auch denkbar, einen elektrischen Notenergiespeicher vorzusehen, welcher aus Akkus oder aus Kondensatoren gebildet ist und der durch eine als Handkurbel ausgebildete Manipulationsvorrichtung aktiviert wird.

Ausführungsbeispiele einer Stromübertragungsvorrichtung sind in der Zeichnung schematisch vereinfacht dargestellt und werden nachfolgend näher erläutert. Es zeigen:
- **Fig. 1**: eine Stromübertragungsvorrichtung gemäß einer ersten Ausführungsform in einer Ausfahrstellung;
- **Fig. 2**: die in **Fig. 1** dargestellte Stromübertragungsvorrichtung in einer Einfahrstellung;
- **Fig. 3**: eine Stromübertragungsvorrichtung gemäß einer zweiten Ausführungsform in einer Ausfahrstellung; und
- **Fig. 4**: die in **Fig. 3** dargestellte Stromübertragungsvorrichtung in einer Einfahrstellung.

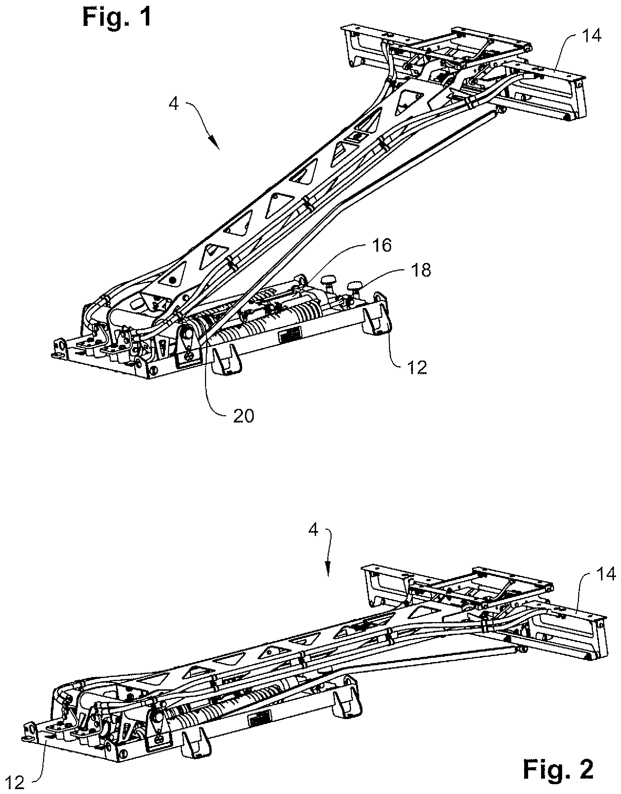

Die **Fig. 1** und **2** zeigen eine Stromübertragungsvorrichtung 4 zur stationären Aufladung elektrischer Energiespeicher von Vorrichtungen, wie beispielsweise von Bussen oder Schienenfahrzeugen. Die Stromübertragungsvorrichtung 4 umfasst einen Rahmen 12, mit dem diese an einem Dachbereich einer Vorrichtung angeordnet ist. An dem Rahmen 12 ist ein als Gelenkarmsystem ausgebildeter Stromüberträger 14 angeordnet. Der Stromüberträger 14 ist rahmenseitig verschwenkbar gelagert und weist an seiner dem Rahmen 12 abgewandten Seite Kontakte auf, mittels derer eine elektrisch leitende Verbindung mit beispielsweise einer Oberleitung herstellt werden kann. Der Stromüberträger 14 ist zwischen einer stromübertragenden Ausfahrstellung, wie in **Fig. 1** abgebildet, und einer die elektrisch leitende Verbindung unterbrechenden Einfahrstellung, wie in **Fig. 2** abgebildet, verschwenkbar. Mit dem Stromüberträger 14 wirkt ein Verstellantrieb 16 zusammen, welcher als Spindelmotor 16 ausgeführt ist. Am Rahmen 12 ist zudem ein Federsystem 18 angeordnet, welches ebenfalls mit dem Stromüberträger 14 zusammenwirkt und diesen in Richtung seiner Ausfahrstellung vorspannt. An der auf der Spindel des Spindelmotors 16 angeordneten Spindelmutter ist eine elektromagnetische Bremsvorrichtung 20 vorgesehen, die als Ruhestrombremse ausgeführt ist.

In seiner Einfahrstellung ist der Stromüberträger 14 mittels der Ruhestrombremse fixiert. Zum Verschwenken des Stromüberträgers 14 aus seiner Einfahr- in seine Ausfahrstellung wird an die Ruhestrombremse eine Spannung angelegt, so dass diese öffnet und der Stromüberträger 14 durch die Federkraft des Federsystems 18 in seine Ausfahrstellung verschwenkt wirkt. Sobald die Ausfahrstellung erreicht ist, wird an die Ruhestrombremse erneut eine Spannung angelegt, so dass diese wieder schließt.

Ein Verschwenken des Stromüberträgers 14 aus seiner Ausfahrstellung in seine Einfahrstellung erfolgt dadurch, dass die Ruhestrombremse durch ein erneutes Anlegen einer Spannung geöffnet wird und der Spindelmotors 16 den Stromüberträger 14 verschwenkt.

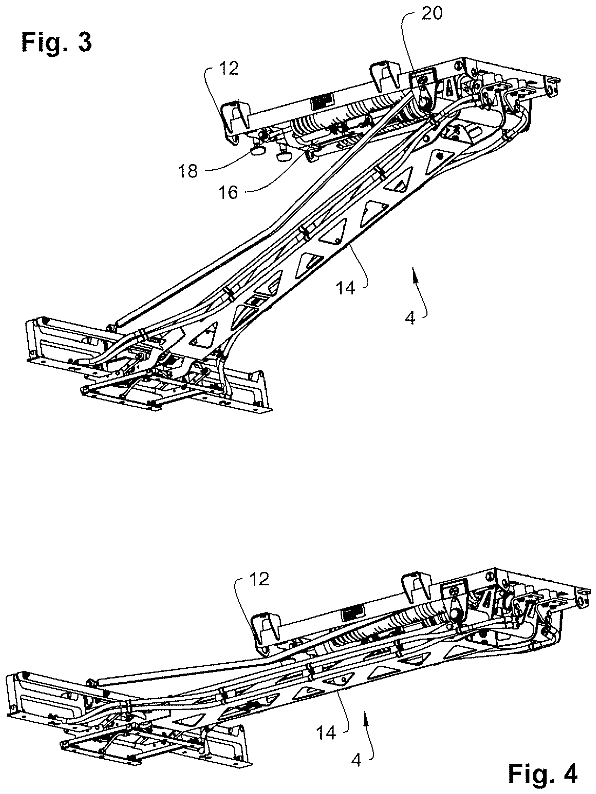

Die in den **Fig. 3** und **4** abgebildete Stromübertragungsvorrichtung 4 entspricht weitestgehend der in den **Fig. 1** und **2** abgebildeten Stromübertragungsvorrichtung, jedoch ist anstelle der Ruhestrombremse eine Arbeitsstrombremse an dem Verstellantrieb bzw. Spindelmotor 16 angeordnet. Eine derartige Stromübertragungsvorrichtung 4 kann beispielsweise stationär an einer Ladestation angeordnet sein. Die Stromübertragungsvorrichtung 4 ist dabei derart an der Ladestation angeordnet, dass sie einen Bereich übergreift, in den eine Vorrichtung, wie beispielsweise ein Bus oder ein Schienenfahrzeug, eingefahren werden kann.

Zum Verstellen des Stromüberträgers 14 aus seiner in **Fig. 4** dargestellten Einfahrstellung in seine in **Fig. 3** dargestellte Ausfahrstellung wird eine an der Arbeitsstrombremse angelegte Spannung entfernt, so dass die Arbeitsstrombremse öffnet. Sobald die Verschwenkbewegung des Stromüberträgers 14 freigegeben ist, verfährt der Verstellantrieb bzw. der Spindelmotor 16 den Stromüberträger 14 in seine Ausfahrstellung. Ist die Ausfahrstellung des Stromüberträgers 14 erreicht, wird an die Arbeitsstrombremse erneut eine Spannung angelegt, so dass diese wieder schließt und den Stromüberträger 14 in seiner Ausfahrstellung blockiert.

Die in den **Fig. 3** und **4** dargestellte Stromübertragungsvorrichtung weist eine FAILSAFE-Funktion auf. Sollte es zu einem Stromausfall kommen, ist es selbst bei Wegfall sämtlicher elektrischer Energieversorgungen möglich, den Stromüberträger 14 aus seiner Ausfahr- in seine Einfahrstellung zu verschwenken. Dadurch ist es möglich, eine Vorrichtung, wie beispielsweise ein Schienenfahrzeug oder einen Bus, bei einem Stromausfall unter der Stromübertragungsvorrichtung 4 zu entfernen. Die FAILSAFE-Funktion wird dadurch realisiert, dass die Arbeitsstrombremse bei Wegfall der Spannung bzw. bei Nichterregung öffnet. Da der Stromüberträger 14 in Richtung seiner Einfahrstellung mittels des Federsystems 18 vorgespannt ist, wird der Stromüberträger 14 in seine Einfahrstellung verschwenkt.

## Patentansprüche

1. Stromübertragungsvorrichtung (4) zur stationären Aufladung elektrischer Energiespeicher von Vorrichtungen und/oder zur mobilen Versorgung elektrischer Antriebseinheiten von Vorrichtungen, umfassend einen Rahmen (12) zur Anordnung der Stromübertragungsvorrichtung (4) an der Vorrichtung, einen an dem Rahmen (12) angeordneten und als Gelenkarmsystem ausgebildeten Stromüberträger (14), welcher zwischen einer stromübertragenden Ausfahrstellung und einer stromflussunterbrechenden Einfahrstellung verschwenkbar ist, einen mit dem Stromüberträger (14) zusammenwirkenden Verstellantrieb und ein mit dem Stromüberträger (14) zusammenwirkendes Federsystem (18), wobei der Verstellantrieb selbsthemmungsfrei ausgeführt und eine Betätigungsvorrichtung vorgesehen ist, welche schaltbar ausgeführt ist, so dass sie die Verschwenkbewegung des Stromüberträgers (14) entweder freigibt oder eine Stellung des Stromüberträgers (14) festlegt,
**dadurch gekennzeichnet,**
**dass** die Betätigungsvorrichtung (20) als elektromagnetische Bremsvorrichtung ausgebildet ist,
der Verstellantrieb als Spindelantrieb (16) ausgebildet ist, und
die Bremsvorrichtung (20) direkt auf den Spindelantrieb (16) einwirkt.

2. Stromübertragungsvorrichtung (4) nach Anspruch 1,
**dadurch gekennzeichnet,**
**dass** die elektromagnetische Bremsvorrichtung (20) als Ruhestrombremse ausgeführt ist und durch Anlegen einer elektrischen Spannung die Verschwenkbewegung des Stromüberträgers (14) freigibt.

3. Stromübertragungsvorrichtung (4) nach Anspruch 2,
**gekennzeichnet durch**
eine Anordnung an einer als Fahrzeug (22) ausgeführten Vorrichtung, wie beispielsweise Schienenfahrzeuge oder Busse, vorzugsweise an deren Dachbereich (24).

4. Stromübertragungsvorrichtung (4) nach Anspruch 1,
**dadurch gekennzeichnet,**
**dass** die elektromagnetische Bremsvorrichtung (20) als Arbeitsstrombremse ausgeführt ist und durch Anlegen einer elektrischen Spannung die Stellung des Stromüberträgers (14) festgelegt ist.

5. Stromübertragungsvorrichtung (4) nach Anspruch 4,
**gekennzeichnet durch**
eine Anordnung an einer stationären Vorrichtung (26), wie beispielsweise eine stationäre Ladestromvorrichtung.

6. Stromübertragungsvorrichtung (4) nach einem der Ansprüche 1 bis 5, **dadurch gekennzeichnet,**
**dass** die Bremsvorrichtung (20) eine von der des Verstellantriebs (16) unabhängige Energieversorgung aufweist.

7. Stromübertragungsvorrichtung (4) nach einem der Ansprüche 1 bis 5, **dadurch gekennzeichnet,**
**dass** die Bremsvorrichtung (20) und der Verstellantrieb (16) eine mit einer Schaltvorrichtung zusammenwirkende gemeinsame Energieversorgung aufweist.

8. Stromübertragungsvorrichtung (4) nach einem der Ansprüche 1 bis 7, **dadurch gekennzeichnet,**
**dass** der Stromüberträger (14) sowohl bodenwärts, himmelwärts, horizontal als auch in eine daraus resultierende Zwischenrichtung verschwenkbar ist.

9. Stromübertragungsvorrichtung (4) nach einem der Ansprüche 1 bis 8, **dadurch gekennzeichnet,**
**dass** die Bremsvorrichtung (20) eine Manipulationsvorrichtung (30) umfasst, mittels derer die Bremsvorrichtung (20) manuell betätigbar ist.

## Claims

1. A current transmission device (4) for stationary charging of electrical energy stores of devices and/or for mobile supplying of electrical drive units of devices, comprising a frame (12) for arranging the current transmission device (4) at the device, a current transmitter (14) which is arranged at the frame (12) and is embodied as an articulated arm system, and which can swivel between a current-transmitting extended position and a current flow-interrupting retracted position, an adjusting drive interacting with the current transmitter (14) and a spring system (18) interacting with the current transmitter (14), the adjusting drive being self-locking-free and an actuating device being provided, which is realised so as to be switchable, such that it either unblocks the swivel movement of the current transmitter (14) or defines a position of the current transmitter (14),
**characterised in that**
the actuating device (20) is designed as an electromagnetic brake device, the adjusting drive is designed as a spindle drive (16), and the brake device (20) acts directly upon the spindle drive (16).

2. The current transmission device (4) according to claim 1, **characterised in that**
the electromagnetic brake device (20) is realised as a closed-circuit brake and unblocks the swivel movement of the current transmitter (14) by applying voltage.

3. The current transmission device (4) according to claim 2, **characterised by**
an arrangement at a device that is realised as a vehicle (22), such as railway vehicles or buses, preferably at the roof regions (24) thereof.

4. The current transmission device (4) according to claim 1, **characterised in that**
the electromagnetic brake device (20) is realised as an open-circuit brake and **in that** applying voltage defines the position of the current transmitter (14).

5. The current transmission device (4) according to claim 4, **characterised by**
an arrangement at a stationary device (26), such as a stationary charging current device.

6. The current transmission device (4) according to any one of the claims 1 to 5,
**characterised in that**
the brake device (20) has an energy supply that is independent of the energy supply of the adjusting drive (16).

7. The current transmission device (4) according to any one of the claims 1 to 5,
**characterised in that**
the brake device (20) and the adjusting drive (16) have a common energy supply that interacts with a switching device.

8. The current transmission device (4) according to any one of the claims 1 to 7,
**characterised in that**
the current transmitter (14) can both swivel towards the ground, towards the sky, horizontally and in an intermediate direction resulting therefrom.

9. The current transmission device (4) according to any one of the claims 1 to 8,
**characterised in that**
the brake device (20) comprises a manipulation device (30), using which the brake device (20) can be actuated manually.

## Revendications

1. Dispositif de transmission de courant (4) pour le chargement stationnaire d'accumulateurs d'énergie électriques des dispositifs et/ou pour l'alimentation mobile d'unités d'entraînement électriques de dispositifs, comprenant un cadre (12) pour la disposition du dispositif de transmission de courant (4) sur le dispositif, un transmetteur de courant (14) disposé sur le cadre (12) et formé comme système de bras articulé, le transmetteur de courant (14) pouvant être pivoté entre une position étendue de transmission de courant et une position retirée d'interruption de flux de courant, un entraînement de réglage coopérant avec le transmetteur de courant (14) et un système de ressort (18) coopérant avec le transmetteur de courant (14), l'entraînement de réglage étant réalisé sans autoblocage et un dispositif d'actionnement étant prévu qui est réalisé pour être commutable afin qu'il débloque le mouvement de pivotement du transmetteur de courant (14) ou définit une position du transmetteur de courant (14), **caractérisé en ce que**
le dispositif d'actionnement (20) est réalisé comme dispositif de freinage électromagnétique, **en ce que** l'entraînement de réglage est réalisé comme entraînement à broche (16), et **en ce que** le dispositif de freinage (20) agit directement sur l'entraînement à broche (16).

2. Dispositif de transmission de courant (4) selon la revendication 1, **caractérisé en ce que**
le dispositif de freinage (20) électromagnétique est réalisé comme frein en circuit fermé et débloque le mouvement de pivotement du transmetteur de courant (14) par l'application d'une tension électrique.

3. Dispositif de transmission de courant (4) selon la revendication 2, **caractérisé par**
être disposé sur un dispositif réalisé comme véhicule (22), comme par exemple des véhicules ferroviaires ou des bus, de préférence au niveau de leur toit (24).

4. Dispositif de transmission de courant (4) selon la revendication 1, **caractérisé en ce que**
le dispositif de freinage (20) électromagnétique est réalisé comme frein en circuit ouvert et la position du transmetteur de courant (14) est définie par l'application d'une tension électrique.

5. Dispositif de transmission de courant (4) selon la revendication 4, **caractérisé par**
être disposé sur un dispositif stationnaire (26), comme par exemple un dispositif de courant de charge stationnaire.

6. Dispositif de transmission de courant (4) selon l'une quelconque des revendications 1 à 5,
**caractérisé en ce que**
le dispositif de freinage (20) a une alimentation énergétique qui est indépendante de l'alimentation énergétique de l'entraînement de réglage (16).

7. Dispositif de transmission de courant (4) selon l'une quelconque des revendications 1 à 5,
**caractérisé en ce que**
le dispositif de freinage (20) et l'entraînement de réglage (16) ont une alimentation énergétique commune qui coopère avec un dispositif de commutation.

8. Dispositif de transmission de courant (4) selon l'une quelconque des revendications 1 à 7,
**caractérisé en ce que**
le transmetteur de courant (14) est pivotable aussi bien vers le sol, vers le ciel et horizontalement qu'à une direction intermédiaire en résultant.

9. Dispositif de transmission de courant (4) selon l'une quelconque des revendications 1 à 8,
**caractérisé en ce que**
le dispositif de freinage (20) comprend un dispositif de manipulation (30) au moyen duquel le dispositif de freinage (20) peut être actionné manuellement.
